# EUROPÄISCHE PATENTANMELDUNG

(11) **EP 1 400 188 A1**
(43) Veröffentlichungstag der Anmeldung: **24.03.2004**
(21) Anmeldenummer: 03017705.9
(22) Anmeldetag: 12.09.2003
(51) Int. Cl.: A47B 9/14, F16B 7/10

(54) **Vorrichtung zum aneinander Fixieren und Lösen von ineinander teleskopierten Profilen**

(30) Priorität: 19.09.2002 AT 14092002
(71) Anmelder: Neudörfler Möbelfabrik Karl Markon GmbH, 7201 Neudörfl (AT)
(72) Erfinder: Preissegger, Günter, 7033 Pöttsching (AT)

(57) **Zusammenfassung**

Die Erfindung betrifft eine Vorrichtung zum Lösen bzw. Halten von zwei teleskopierbaren Profilen aneinander. Im Bereich der überlappenden Länge der beiden Profile ragt ein mit dem ersten Profil verbundener und an diesem bezüglich Profilrichtung unbeweglicher Fixierteil in eine Ausnehmung an der Umfangsfläche des zweiten Profils. Die Ausnehmung weist an einer Flanke zahnartig Ausbuchtungen die sich normal zur Profilrichtung erstrecken auf. Eines der beiden Profile (2, 12) ist an seinem Umfang mit einer beweglichen Passung so eingefaßt daß es an dem Umfangsteil mit der Ausnehmung (4, 14) so weit wie die Tiefe der zahnartigen Ausbuchtungen (4.1,14.1) beweglich ist.

## Beschreibung

Die Erfindung betrifft eine Vorrichtung zum aneinander Fixieren und Lösen von ineinander teleskopierten Profilen in vorbestimmten Einraststellungen.
Die Vorrichtung ist besonders vorteilhaft für die Anwendung in Teleskopen einzusetzen, welche auf Grund Ihrer Anwendung auch optische Ansprüche erfüllen müssen. Typische Anwendungen sind Tischbeine von höheneinstellbaren Tischen, Steher von Trennwänden für den Innenausbau, sowie Stative.

Eine gängige Methode teleskopierbare Profile in ineinandergeschobenem Zustand aneinander lösbar zu fixieren besteht darin von einer Stelle am Umfang des äußeren Profils aus einen Fixierteil, beispielsweise eine Schraube, einen federnd gehaltenen Bolzen oder einen Teil eines Hebels in Ausnehmungen oder Vertiefungen am Umfang des inneren Profils zu drücken. Eine derartige Ausführung ist in der DE 19857747 A1 angeführt. Nachteilig an dieser Bauweise ist, daß der notwendigerweise am Umfang des äußeren Profils sichtbare Fixierteil optisch stört. Außerdem ist es zum Verstellen der Lage der beiden Profile zueinander erforderlich gleichzeitig sowohl die Lage der Profile zueinander in die richtigen Stellung zu bringen als auch den Fixierteil zu betätigen.
Eine andere häufig angewendete Methode besteht darin zwischen den beiden Profilen einen aus mehreren Einzelteilen bestehenden Beschlag anzuordnen, von dem ein Teil starr mit einem Profil verbunden ist und der andere Teil starr mit dem zweiten Profil. Der Beschlag ist in sich in teleskopierbar und hat auf der Teleskopierstrecke einige Einraststellungen. Relativbewegung der Profile in die eine Richtung läßt der Beschlag zu; bei Relativbewegung entgegengesetzte Richtung rastet der Beschlag in die nächstgelegene Einraststellung ein und sperrt weitere Relativbewegung. Wird in der erlaubten Richtung bis zum Endanschlag bewegt so kann die Richtung umgekehrt werden und es erfolgt kein Einrasten bis zum entgegengesetzten Endanschlag. Auf Tische bezogen heißt das: ein Tischbein kann durch Anheben des Tisches und Ausziehen eines Beinteiles in Stufen im Rasterabstand verlängert werden. Wenn das Bein maximal ausgezogen ist rastet es nicht ein sondern muß maximal zusammengeschoben werden. Bei weiterem Ausziehen rastet es wieder in allen Raststellungen ein. Nachteilig an dieser Methode ist, daß Übergänge von einer Einraststellung in eine andere nur in eine Richtung direkt erfolgen können, in die Gegenrichtung ist ein längeres Herumfahren erforderlich. Ein weiterer Nachteil ist bei manchen Anwendungen, daß die Profile nur gegen Teleskopieren in eine Richtung gehalten sind, in die entgegengesetzte Richtung sind sie mit Ausnahme eines Endanschlages nicht gegeneinander fixiert.

Die der Erfindung zu Grunde liegende Aufgabe besteht demgegenüber darin die Verbindung zwischen den ineinander teleskopierbaren Profilen so auszubilden, daß kein von außen sichtbarer Betätigungsteil zum Lösen oder Fixieren der Profile aneinander vorkommt und daß von jeder Fixierstellung in jeder andere Fixierstellung direkt umgestellt werden kann.

Zur Lösung der Aufgabe wird ein Fixierteil verwendet, welcher an der Innenseite des äußeren Profil angeordnet ist und dort zumindest gegen Relativverschiebung in Teleskopierrichtung gegenüber dem äußeren Profil starr gehalten wird. Das innere Profil ist mit einer in Profilrichtung verlaufenden Ausnehmung versehen, welche zumindest an einer Flanke zahnartig Erweiterungen aufweist. Der Fixierteil ragt in diese Ausnehmung. Entsprechend der Stellung des inneren Profils gegenüber dem äußeren Profil in der Ebene normal zur Teleskopierrichtung ist der Fixierteil entweder mit einer dieser Erweiterungen in Eingriff oder nicht. Ist er in Eingriff so ist Teleskopierbewegung blockiert; andernfalls ermöglicht. Zum Lösen bzw. Fixieren der Profile in Teleskopierrichtung ist ein relatives Verdrehen der beiden Profile zueinander in der Ebene normal auf die Teleskopierrichtung erforderlich.
In einer vorteilhaften Weiterentwicklung wird ein zwischen den Profilen wirkender elastischer Teil vorgesehen, welcher bei Abwesenheit einer dagegen wirkenden äußeren Kraft die Profile in einer bevorzugten relativen Lage in der Ebene normal auf die Teleskopierrichtung hält. In dieser bevorzugten relativen Lage ist der Fixierteil mit einer Erweiterung der Ausnehmung in Eingriff und die Profile sind somit gegen Teleskopierbewegung gesperrt.

Die Erfindung wird anhand der Zeichnungen anschaulicher.
- Fig. 1:: - zeigt in einer Längsschnittansicht durch die beiden teleskopierten Profile das Funktionsprinzip.
- Fig. 2:: - zeigt in einer Längsansicht mit geschnittenem Außenprofil eine sehr vorteilhafte Ausführungsform und Weiterführung der Erfindung.
- Fig. 3:: zeigt in einer Schnittansicht in Profilebende eine Ausführungsform wobei ein U-Profil und ein Rechteckhohlprofil gegeneinander teleskopiert werden.
- Fig. 4:: zeigt in gleicher Ansicht wie Fig. 2 eine weitere sehr vorteilhafte Ausführungsform und Weiterführung der Erfindung.

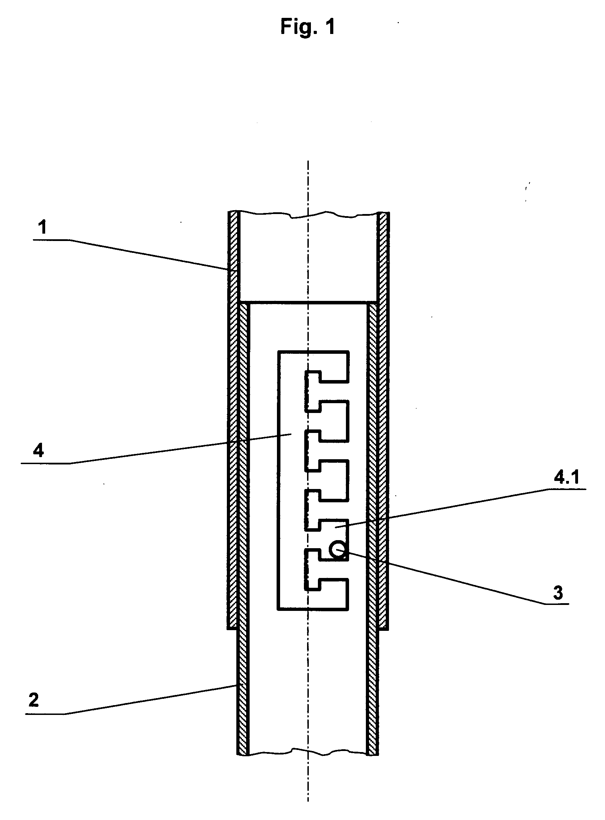

Starr mit dem äußeren Profil 1 gemäß Fig. 1 verbunden ist an dessen Innenseite ein Fixierteil 3 in Form eines Bolzens angebracht. Die Mantelfläche des inneren Profils 2 ist mit einer Ausnehmung 4 versehen, welche sich in Profilrichtung erstreckt und normal dazu zahnartig Erweiterungen 4.1 aufweist. Die Profile sind gegen Relativbewegung aneinander in Profilrichtung gesperrt, da dabei der Fixierteil 3 mit der in der jeweiligen Richtung nächstliegenden Flanke einer Erweiterung 4.1 in deren Bereich er ragt, zum Anschlag kommt.
Um die Profile in Profilrichtung gegeneinander verschieben zu können müssen sie zuerst in der Profilebene so gegeneinander verdreht werden, daß der mit dem äußeren Profil verbundene Fixierteil 3 außerhalb von Erweiterungen 4.1 in die Ausnehmung 4 im inneren Profil ragt.

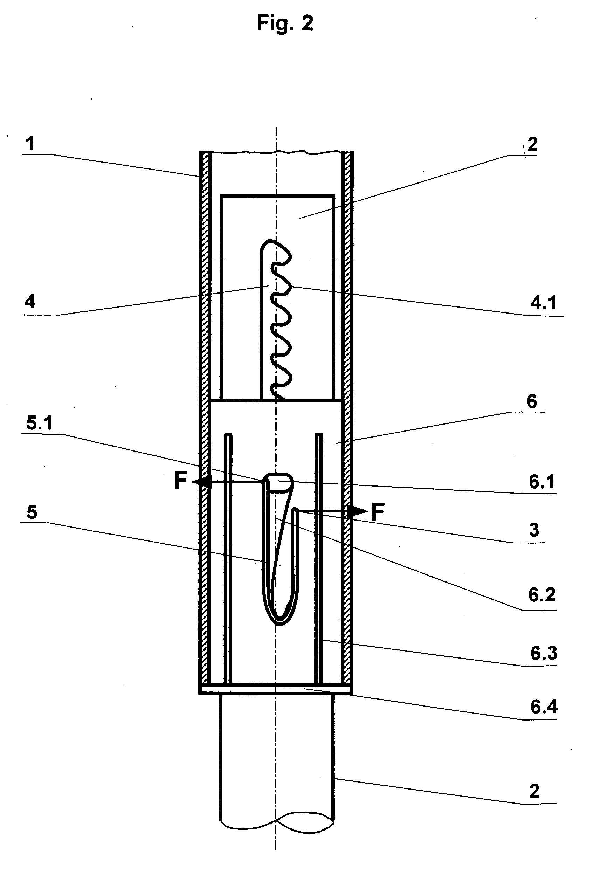

Auch bei der Ausführungsform gemäß Fig. 2 ist das innere Profil 2 mit einer Ausbuchtung 4 mit zahnartigen Erweiterungen 4.1 versehen. Der Fixierteil 3 ist hingegen nicht direkt mit dem äußeren Profil 1 starr verbunden, sondern mit einer Hülse 6 die ihrerseits starr mit dem äußeren Profil 1 verbunden ist.
Zwischen der Hülse 6 und dem inneren Profil 3 wirkt eine Feder 5. Sie ist teilweise mit der Hülse 6 starr verbunden und reicht mit einem dagegen elastisch beweglichen Ende 5.1 in den Bereich der Ausnehmung 4 im inneren Profil. Die Feder ist so mit einer Kraft F vorgespannt, daß sie in der Profilebene den Bereich an dem das gegenüber der Hülse elastisch bewegliche Ende 5.1 anliegt gegenüber dem mit der Hülse verbundenen Fixierteil 3 wegzuschieben trachtet. Dadurch wird das innere Profil 2 relativ zum äußeren Profil 1 in der Profilebene durch Druck auf die den Erweiterungen 4.1 gegenüberliegende Flanke der Ausnehmung 4 gedreht bis der Fixierteil 3 mit einer Spitze einer zahnartigen Erweiterung 4.1 in Anschlag kommt. Dann ist keine weitere relative Drehbewegung der beiden Profile in dieser Richtung und keine Relativbewegung in Längsrichtung möglich.

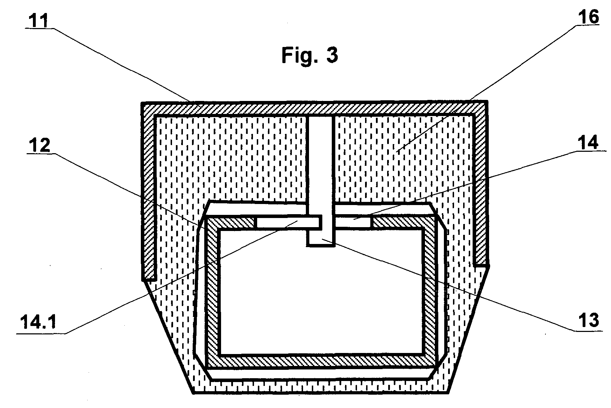

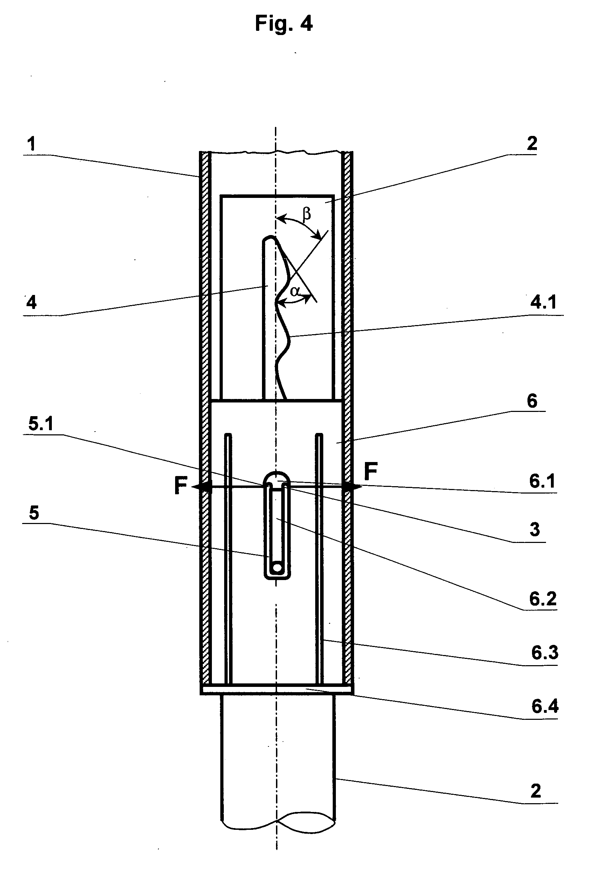

Bei der Ausführungsform gemäß Fig. 2 ist der Fixierteil 3 einstückig mit der Feder 5 als eines derer beiden Enden ausgeführt. Die Feder 5 ist dabei eine Biegefeder aus gebogenem Draht. Sie liegt mit ihrem Mittelteil im äußeren Bereich der Mantelfläche der Hülse 6 die den Raum zwischen der äußeren Umfangsfläche des inneren Profils 3 und der inneren Umfangsfläche des äußeren Profils 1 ausfüllt und mit dem außen liegenden Profil 1, beispielsweise durch Klemmung starr verbunden ist. Mit den Enden ist die Feder 5 in Richtung Mittelachse bis in den Umfangsbereich des inneren Profils 3 gebogen. Beide Enden ragen durch durchgehende Ausnehmungen in der Mantelfläche der Hülse 6 in die Ausnehmung 4 des inneren Profils.
Die Ausnehmung 6.1 in der Hülse 6 durch welche jenes Ende 5.1 der Feder 5 ragt, welches gegenüber der Hülse 6 elastisch beweglich ist, ist so groß ausgeführt daß das durchgeführte Federende in ihr den Platz für jene federnde Verformung findet, die dann statt findet wenn das innere Profil gegenüber dem äußeren Profil durch eine äußere Kraft entgegen der Federwirkung in Richtung der Spitzen der zahnartigen Ausbuchtungen 4.1 bewegt wird. Um die elastische Bewegung des Federendes zu ermöglichen ist neben der Ausnehmung 6.1 auch eine Vertiefung 6.2 in der Hülse 6 vorgesehen in welcher sich der dem Federende 5.1 nahe liegende Bereich der Feder bewegen kann.
Es wäre auch möglich das den Fixierteil 3 bildende Federende ebenfalls gegenüber der Hülse elastisch beweglich durch die erweiterte Ausnehmung 6.1 und einen vertieften Bereich davor durch die Hülse zu führen " wie in Fig. 4 dargestellt - und nicht durch eine enge eigene Ausnehmung. Die Variante gemäß Fig. 2 hat dem gegenüber den Vorteil, daß das innere Profil in der Profilebene nur in jene Richtung entgegen der Federkraft bewegt werden kann durch welche ein Ausklinken des Fixierteiles bewirkt wird.
Die Hülse 6 dient nicht nur zum Halten des Fixierteiles 3 und der Feder 5 sondern sie dient auch als Gleitlager für die Relativbewegung des inneren Profils 2 gegenüber dem äußeren Profil 1. Idealerweise ist die Hülse als Kunststoffspritzgussteil ausgeführt. Sie faßt das innere Profil im Idealfall mit einer leichten, gleitfähigen Presspassung oder einer möglichst kleinen Spielpassung ein. Mit dem äußeren Profil ist die Hülse durch eine Preßpassung, über erhaben liegenden Stege 6.3 verbunden.
Die Hülse 6 hat dann eine sehr einfache Querschnittsform wenn die Profile 1 und 2 Kreisringquerschnittsform haben, also einfache Rundrohre sind und zueinander konzentrisch angeordnet sind. Die Profile 1 und 2 könnten prinzipiell aber beliebige Querschnittsform haben und in einem weiten Bereich zueinander liegen. Die Hülse 6 muß - wie auch immer - starr mit dem einem Profil verbunden sein und das andere Profil in einer beweglichen Passung an der Mantelfläche einfassen. Das in dieser Einfassung gehaltene Profil muß darin einen Bewegungsbereich für Relativbewegung in der Profilebene, vorteilhafterweise Relativdrehung haben, welcher so groß ist wie es dem Weg des Fixierteiles an den Ausbuchtungen 14.1 zwischen den fixierten Stellungen und gelöster Stellung entspricht. Fig. 3 zeigt wie ein U-Profil 11 mit einem Rechteck-Hohlprofil 12 teleskopierbar gehalten werden kann. Das U-Profil 11 ist durch Klebung mit der Hülse 16 fix verbunden. Die Hülse umfaßt in einer gleitfähigen Lagerung das Rechteckprofil 12. Mit dem U-Profil 11 fix verbunden ist der Fixierteil 13, er ragt durch die Ausnehmung 14 im Rechteckprofil 12. Je nach Lage des Rechteckprofils liegt der Fixierteil in einer zahnartigen Ausbuchtung 14.1 der Ausnehmung 14 oder nicht, womit das Rechteckprofil gegen Teleskopierbewegung bezüglich dem U-Profil gehalten ist oder nicht.

Die Ausführungsform gemäß Fig. 2 ermöglicht einen sehr raschen und einfachen Zusammenbau. Die Schritte dabei sind:
- Einschieben des inneren Profils 2 in die Hülse 6 und zurechtdrehen der Hülse am Profil sodaß die Ausnehmung 6.1 über der Ausnehmung 4 am Profil 2 liegt.
- Eindrücken der Feder 5 in die dafür vorgesehenen Ausnehmungen in der Hülse 6.
- Einschieben der so gebildeten Baugruppe in das äußere Profil 1, evtl. unter Zuhilfenahme einer Presse oder eines Gummihammers bis der Kragen 6.4, welcher Teil der Hülse 6 ist und diese am äußeren Ende ihrer Mantelfläche umfaßt, an der Stirnseite des äußeren Profils zum Anschlag kommt.

Tests haben gezeigt daß bei einer Dimensionierung der einzelnen Teile wie sie für teleskopierbare Tischbeine paßt dieser Zusammenbau je Tischbein ohne Zuhilfenahme von Maschinen mühelos in weniger als einer Minute zu bewerkstelligen ist.

Bei festgehaltenem äußeren Profil 1 braucht zum Verstellen des inneren Profils 2 in Profillängsrichtung dieses nur mit einer Hand gefaßt zu werden, ein kleines Stück entgegen der Kraftwirkung der Feder 5 nach links gedreht, in der gewünschten Längsrichtung das gewünschte Stück verschoben und wieder losgelassen werden. Bei losem zweiten Profil muß dieses beim Verstellen mit der zweiten Hand gehalten werden.
Damit ist die der Erfindung zugrunde liegende Aufgabe erfüllt. Es kann in Teleskopierrichtung von jeder möglichen Lage in jede andere mögliche Lage direkt umgestellt werden ohne daß ein von außen sichtbarer Betätigungsteil zum lösen bzw. fixieren der Profile aneinander vorkommt.

Zusätzlich ist diese Lösung auch noch kostengünstig da nur einfache Teile verwendet werden müssen und da der Zusammenbau sehr einfach ist. Weiters bietet diese Lösung noch den Vorteil daß die beiden Profile aneinander geführt werden.

Ein weiterer Vorteil kann sich ergeben wenn wie in Fig. 4 dargestellt die Winkel α, β der Flanken der Zähne 4.1 zu der Öffnung der Flanken hin kleiner sind als der Reibungswinkel zwischen Nutflanken und Fixierteil. Dadurch kann das Teleskopieren auch erfolgen indem die beiden Profile mit Kraft in Teleskopierrichtung aneinander verschoben werden. Die Kraft die zum Teleskopieren erforderlich ist sinkt mit den Flankenwinkeln α, β und mit der Vorspannung und der Steifheit der Feder 3. Beim Verschieben der Profile aneinander in Teleskopierrichtung rasten diese immer wieder an solchen Stellen ein, bei denen der Fixierteil 3, welcher auch Teil der Feder 5 ist an Spitzen der Zähne 4.1 zu liegen kommt. Durch unterschiedliche Ausbildung der Flankenwinkel α, β kann wird erreicht daß die Mindestkraft die zum Teleskopieren erforderlich ist in verschiedene Richtungen verschieden stark ist, bzw. daß in eine Richtung Teleskopieren durch verschieben allein erforderlich ist und daß in die andere Richtung zum Teleskopieren ein Auslösen durch Verdrehen der Profile in der Profilebene wie weiter oben beschrieben erforderlich ist. Eine derart asymmetrische Ausführung ist beispielsweise für Trennwandsteher vorteilhaft anwendbar, da diese einfach zu strecken sein sollen, in die entgegengesetzte Richtung aber sehr fest halten sollen.
Wenn der Flankenwinkel β an der inneren Seite des inneren Profils 2 sehr spitz gewählt wird, dann kann das innere Profil durch geringe Kraft einfach aus dem äußeren Profil herausgezogen werden. Für den äußeren Flankenwinkel α gilt dasselbe für Bewegung des inneren Profils in das äußere hinein. Dadurch daß der Fixierteil 3 gemäß Fig. 4 bezüglich dem äußeren Profil in der Profilebene beweglich ist kann Teleskopierbewegung der beiden Profile aneinander erfolgen ohne daß die beiden Profil in der Profilebene gegeneinander verschoben werden.
Teleskope dieser Art sind für die Anwendungen in Stativen, bei denen die zu erwartenden Kräfte eng eingrenzbar sind, sehr vorteilhaft anzuwenden.

Es ist natürlich auch denkbar, den Fixierteil 3 am inneren Profil anzubringen und die Öffnung 4 mit der der Fixierteil korrespondiert am äußeren Profil. An der Bedienbarkeit würde sich nichts ändern aber die Optik wäre weit weniger schön.
Da bei entsprechender Ausformung der Hülse 6 nahezu beliebige Profile teleskopierbar aneinander gehalten werden können, ist die Erfindung auch für teleskopierbar angeordnete Profilpaare anwendbar bei denen auf Grund der Profilform nicht von innerem und äußerem Profil gesprochen werden kann.

## Patentansprüche

1. Vorrichtung zum Lösen bzw. Halten der Teleskopierbewegung von zwei aneinander teleskopierbaren Profilen wobei im Bereich der überlappenden Länge der beiden Profile ein mit dem ersten Profil verbundener und an diesem bezüglich Profilrichtung unbeweglicher Fixierteil in eine Ausnehmung an der Umfangsfläche des zweiten Profils ragt, welche an einer Flanke zahnartig Ausbuchtungen aufweist die sich normal zur Profilrichtung erstrecken, **gekennzeichnet dadurch daß** eines der beiden Profile an seinem Umfang mit einer beweglichen Passung umfaßt ist, sodaß es an dem Umfangsteil mit der Ausnehmung (4, 14) so weit wie die Tiefe der zahnartigen Ausbuchtungen (4.1, 14.1 ) beweglich ist.

2. Vorrichtung nach Anspruch 1, **gekennzeichnet dadurch, daß** eines der beiden Profile gegenüber dem zweiten Profil in seiner Profilebene drehbar umfaßt ist.

3. Vorrichtung nach einem der Ansprüche 1 oder 2, **gekennzeichnet dadurch, daß** eine Hülse (6,16) mit einem Profil (1,11) starr verbunden ist und daß diese Hülse das zweite Profil (2, 12) mit einer beweglichen Passung am Umfang einfaßt.

4. Vorrichtung nach einem der vorigen Ansprüche, **gekennzeichnet dadurch, daß** vom ersten Profil (1) aus in die Ausnehmung (4) im zweiten Profil neben dem Fixierteil (3) noch ein zweiter Teil (5.1) ragt, welcher gegenüber dem Fixierteil (3) in Profilumfangsrichtung versetzt ist, daß zumindest einer dieser beiden Teile normal zur Profilrichtung beweglich ist und daß zwischen diesen beiden Teilen eine Feder gespannt ist, welche diese auseinander zu schieben trachtet.

5. Vorrichtung nach Anspruch 4, **gekennzeichnet dadurch, daß** sowohl Fixierteil (3) als auch zweiter Teil (5.1) als die zwei Enden einer einzigen Biegefeder 5 ausgeführt sind.

6. Vorrichtung nach einem der vorigen Ansprüche, **gekennzeichnet dadurch, daß** der Winkel zwischen den Zahnflanken der Ausbuchtungen (4.1, 14.1) und deren Öffnung zum durchgehenden Teil der Ausnehmung (4, 14) ein Winkel (α, β) liegt, welcher spitzer ist als der Winkel der Grenzreibung zwischen dem Material des Profils (2, 12) mit der Ausnehmung und dem Material des Fixierteiles (3, 13).

7. Vorrichtungen nach einem der vorangegangenen Ansprüche, **gekennzeichnet dadurch, daß** der Fixierteil (3, 13) in der Profilebene jenes Profils (1, 11) beweglich ist, an welchem er in Profillängsrichtung fixiert ist.

8. Vorrichtung nach einem der vorangegangenen Ansprüche, **gekennzeichnet dadurch, daß** sie als teleskopierbares Tischbein verwendet wird.

9. Vorrichtung nach einem der Ansprüche 4 bis 7, **gekennzeichnet dadurch, daß** die dem ersten Profil zugewandten Zahnflanken der Ausbuchtungen (4.1, 14.1) zur Öffnung der Ausbuchtung einen spitzeren Winkel (α) einschließen als der entsprechende Winkel (β) der entgegengesetzten Zahnflanken.

10. Vorrichtung nach Anspruch 9, **gekennzeichnet dadurch, daß** sie als Bein eines Stativs verwendet wird.

11. Vorrichtung nach Anspruch 9, **gekennzeichnet dadurch, daß** sie als Steher für den Innenausbau verwendet wird.
